# FASCICULE DE BREVET EUROPEEN

(11) **EP 1 028 241 B1**
(45) Date de publication et mention de la délivrance du brevet: **29.09.2004**
(21) Numéro de dépôt: 00400314.1
(22) Date de dépôt: 04.02.2000
(51) Int. Cl.: F02D 41/02, B60K 41/28

(54) **Procédé et dispositif de commande du groupe motopropulseur d'un véhicule automobile**
Verfahren und Vorrichtung zum Steuern einer Antriebseinheit eines Kraftfahrzeuges
Method and device for controlling a motor vehicle power unit

(30) Priorité: 12.02.1999 FR 9901725
(43) Date de publication de la demande: 16.08.2000
(73) Titulaire: Renault s.a.s., 92100 Boulogne Billancourt (FR)
(72) Inventeur: Maurel, David, 92500 Rueil Malmaison (FR); Toffolo, Gabriel, 92500 Rueil Malmaison (FR)

(56) Documents cités:
- EP-A- 0 605 104
- EP-A- 0 766 024
- EP-A- 0 859 132
- EP-A- 0 874 149
- EP-A- 0 892 281
- GB-A- 2 319 635
- COUSTON M C: "LES REGULATEURS DE DISTANCE" INGENIEURS DE L'AUTOMOBILE, no. 685, 1 novembre 1993 (1993-11-01), pages 46-48, XP000414524 ISSN: 0020-1200

## Description

La présente invention est relative à un procédé de commande du groupe motopropulseur d'un véhicule automobile et, plus particulièrement, à un tel procédé du type suivant lequel on commande ledit groupe en fonction d'une estimation du contexte routier. La présente invention est aussi relative à un dispositif pour la mise en oeuvre de ce procédé.

On connaît du document US 5 182 710 un système de commande des passages des rapports d'une transmission automatique de véhicule automobile propulsé par un moteur à combustion interne qui, à partir de paramètres internes du véhicule tels que l'angle d'ouverture du papillon des gaz, le régime du moteur et la vitesse du véhicule, réalise un classement des conditions de roulage du véhicule dans l'un des modes suivants : bouchon, ville, autoroute, conduite sportive, pour chacun desquels des lois de passage "cartographiées" spécifiques sont définies. Le système commande ensuite le passage des rapports suivant les lois correspondant au mode déterminé.

On connaît aussi de US 5 285 523 un appareil de reconnaissance des conditions de roulage d'un véhicule à partir de paramètres internes au véhicule tel que l'enfoncement de la pédale d'accélérateur, la vitesse d'enfoncement de cette pédale, la vitesse du véhicule, l'enfoncement de la pédale de frein et le rapport de boîte de vitesses engagé, ces paramètres étant traités dans des réseaux neuronaux. Il s'agit encore de commander une transmission automatique en fonction des conditions de roulage reconnues.

On connaît encore de US 4 853 720 et US 5 566 072 des procédés de commande de groupes motopropulseurs de véhicules automobiles qui procèdent par détermination des conditions de roulage du véhicule, toujours à l'aide de paramètres internes au véhicule et par commande du groupe en fonction de la détermination faite.

L'observation des seuls paramètres internes au véhicule ne permet cependant pas de déterminer correctement certaines conditions de roulage, ou "contexte routier", du véhicule définies par exemple par le type de la chaussée parcourue et la densité du trafic automobile sur cette chaussée. C'est ainsi que lorsque le véhicule roule sur une voie de circulation encombrée et ralentie par des véhicules "poids lourds" par exemple, alors qu'une voie adjacente de même sens connaît une circulation plus fluide, l'observation des seuls paramètres internes ne permet pas de prédire l'imminence d'un changement de voie de circulation décidé par le conducteur du véhicule, vers la voie plus fluide. L'estimation du contexte routier basée sur l'observation des seuls paramètres internes conduit à une prédiction de faible demande de puissance par le conducteur, due à la faible vitesse de la circulation sur la voie ralentie, alors que le moteur devrait être préparé au contraire à délivrer la forte puissance exigée pour réaliser un changement de voie en toute sécurité.

La publication EP0766024 propose de prendre en considération des paramètres externes au véhicule, dans la commande du groupe motopropulseur. Toutefois, elle se limite à en tirer une estimation de la configuration des voies de la chaussée. La présente invention a précisément pour but de fournir un procédé de commande du groupe motopropulseur d'un véhicule automobile en fonction d'une estimation du contexte routier, qui ne présente pas les limitations, telles que celle explicitée ci-dessus, des procédés de ce type connus de la technique antérieure.

Dans ce but, elle propose de tirer par analyse de l'évolution de paramètres internes et externes au véhicule sur une durée prédéterminée, une estimation d'au moins une caractéristique du groupe formé par : le nombre de véhicule changeant de voie de circulation pendant ladite durée (T), le nombre de véhicule par unité de distance sur ladite chaussée, la vitesse moyenne des véhicules circulant sur ladite chaussée, le rayon de courbure moyen de la partie de la chaussée sur laquelle circule lesdits véhicules pendant ladite durée (T). Comme on le verra en détail dans la suite de la présente description, la présente invention permet de réaliser une estimation plus complète du contexte routier, sur toutes les voies d'une même chaussée et d'en tirer une prédiction plus précise et plus sûres des demandes de puissance susceptibles d'être adressées au groupe motopropulseur par le conducteur du véhicule.

Suivant d'autres caractéristiques du procédé selon l'invention, on utilise un appareil de télémétrie pour mesurer lesdits paramètres externes. Cet appareil de télémétrie est préférentiellement du type à balayage. Les paramètres externes mesurés sont constitués par les positions et vitesses relatives de chacun des véhicules circulant sur les diverses voies de la chaussée, au voisinage du véhicule dont le groupe motopropulseur est commandé suivant la présente invention.

D'autres avantages de la présente invention apparaîtront à la lecture de la description qui va suivre et à l'examen du dessin annexé dans lequel :
- la figure 1 est un organigramme général d'un dispositif pour la mise en oeuvre du procédé suivant l'invention,
- la figure 2 est un organigramme détaillé de ce dispositif.

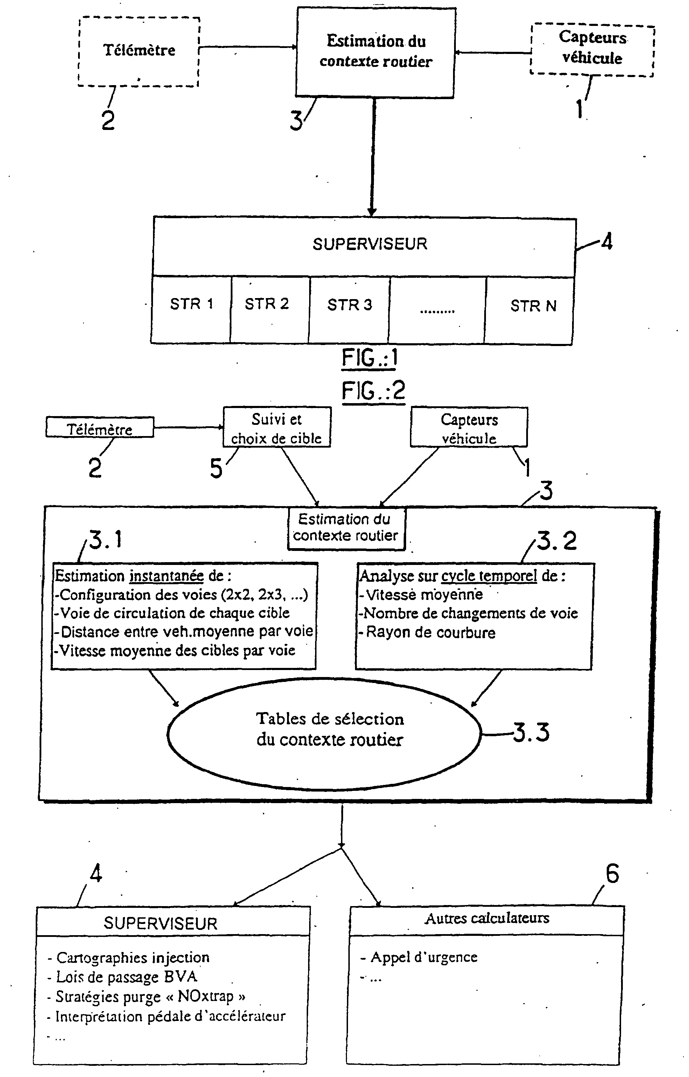

On se réfère à la figure 1 du dessin annexé où il apparaît que le dispositif suivant l'invention comprend essentiellement un ensemble 1 de capteurs de paramètres de fonctionnement internes au véhicule, un appareil de télémétrie 2 ou "télémètre" d'un type qui sera précisé plus loin, pour la mesure de paramètres externes au véhicule, des moyens 3 d'estimation du contexte routier alimentés par l'ensemble de capteurs 1 et le télémètre 2 et des moyens 4 de supervision, ou "superviseur", du fonctionnement du groupe motopropulseur (non représenté) du véhicule, conçus pour commander ce groupe en fonction du contexte estimé et d'une stratégie correspondante choisie parmi plusieurs stratégies prédéterminées STR1, STR2, .... STRn, optimisant chacune un critère tel que la consommation en carburant du véhicule, la réduction de la pollution par les gaz d'échappement d'un moteur à combustion interne formant partie du groupe motopropulseur, la puissance délivrée par ce groupe, ou une combinaison de tels critères, par exemple.

Pour l'essentiel, le procédé consiste à procéder a) à une analyse du contexte routier à partir des informations fournies par les moyens 1 et 2, b) à une analyse permettant de choisir automatiquement, parmi plusieurs types de lois de commande du groupe motopropulseur du véhicule, celle qui est la mieux adaptée au contexte observé, et c) à une analyse permettant de paramétrer lesdites lois de commande selon ce contexte. Pour ce faire, suivant une caractéristique importante de la présente invention, les informations sur l'état du contexte routier sont délivrées au superviseur 4 du groupe motopropulseur.

On se réfère maintenant à la figure 2 du dessin annexé pour décrire en plus de détail le dispositif suivant l'invention et le procédé de commande mis en oeuvre avec ce dispositif. On retrouve évidemment à la figure 2 les moyens 1 à 4 énoncés ci-dessus.

Le télémètre 2 peut être du type connu utilisant un rayonnement infrarouge ou du type radar. Avantageusement, suivant l'invention, il peut être constitué par un télémètre formant partie d'un dispositif de régulation de distance entre véhicules, dit ACC (de l'anglais Adaptive Cruise Control), avantageusement à balayage mécanique. Un tel télémètre permet en effet de surveiller la circulation automobile sur les diverses voies adjacentes d'une même chaussée, par exemple une chaussée d'autoroute. La présente invention utilise cette caractéristique, comme expliqué ci-dessous.

Le télémètre 2 délivre des échos à un module 5, essentiellement logiciel, de suivi et de choix des cibles. Ce module est propre à pister les divers objets détectés par le télémètre 2 dans le champ que celui-ci balaye, en avant du véhicule équipé du dispositif suivant l'invention. Ces objets, ou cibles, peuvent être mobiles (véhicules) ou fixes (bords de route, panneaux, véhicule à l'arrêt, etc...). Il est propre aussi à calculer la distance Dr, la vitesse Vr et la position angulaire de tous les objets, relativement au véhicule, ainsi que les accélérations relatives de ces objets.

Les moyens d'estimation 3 reçoivent ces informations, ainsi que d'autres délivrées par l'ensemble de capteurs 1 (vitesse du véhicule, accélération longitudinale et transversale du véhicule, etc...) pour exécuter :
- une première estimation, instantanée, à l'étape 3.1 concernant, par exemple, les paramètres suivants : configuration des voies de la chaussée (deux fois deux voies, deux fois trois voies, etc...), voie d'affectation de chaque cible, distance entre véhicules moyenne par voie, vitesse moyenne des cibles par voie (soit la vitesse moyenne des cibles, ou véhicules, circulant sur une même voie, à l'instant considéré),
- une deuxième estimation à l'étape 3.2, basée sur l'évolution d'informations enregistrées lors d'un cycle temporel de durée T prédéterminée, ces informations ayant trait, par exemple : au nombre de véhicules changeant de voies de circulation pendant la durée T, à la concentration moyenne (nombre de véhicules par unité de longueur de voie) des véhicules sur chaque voie pendant la durée T, à la vitesse moyenne du trafic pendant cette durée T, au rayon de courbure moyen de la partie de la chaussée sur laquelle circulent les véhicules observés pendant la durée T.

A l'étape 3.3, des tables de sélection de contexte permettent, à partir des informations élaborées aux étapes 3.1 et 3.2, de déterminer le contexte routier, soit le type de chaussée (classé par exemple : chaussée urbaine, voie rapide, autoroute, route de montagne) et la densité du trafic (classée par exemple : dense, normale, fluide).

Le contexte routier ainsi déterminé est transmis au superviseur 4 pilotant le groupe motopropulseur du véhicule qui, en fonction de ce contexte, agit sur diverses stratégies STRi (i de 1 à n) de commande de ce groupe, par :
- changement des lois de commande, ou "cartographies" des quantités de carburant injectées dans un moteur à combustion interne formant partie de ce groupe, par exemple pour minimiser la consommation et/ou la pollution associée à ce moteur,
- adaptation des lois de passage de rapports d'une boîte de vitesse automatique associée à ce groupe motopropulseur, par exemple pour optimiser l'agrément de conduite, la consommation, la pollution,
- optimisation d'une stratégie de purge d'un pot catalytique à piégeage des oxydes d'azote en mélange pauvre, traitant les gaz d'échappement d'un moteur à combustion interne formant partie du groupe motopropulseur. On sait qu'une telle purge exige un enrichissement temporaire du mélange air/carburant d'alimentation du moteur, avec pour conséquence une réduction de la marge de couple moteur que peut demander le conducteur du véhicule. La détermination de la densité du trafic par le procédé suivant l'invention permet de ne commander une telle purge que lorsque ce trafic n'implique pas des demandes de surcroît de puissance par le conducteur,
- interprétation de la consigne de couple moteur demandé par le conducteur d'un véhicule équipé d'un capteur de position d'une pédale d'accélérateur, l'interprétation pouvant alors tenir compte du type de chaussée et de la densité du trafic.

La détermination du contexte routier suivant l'invention peut aussi être utilisée par des moyens autres que le superviseur du groupe motopropulseur, soit par un ou plusieurs autres calculateurs 6 (voir figure 2) exécutant d'autres fonctions dans le véhicule, telles que par exemple une régulation de la présentation d'informations au conducteur du véhicule en fonction de leur degré d'urgence.

On revient maintenant aux moyens d'estimation 3 du dispositif suivant l'invention pour décrire en plus de détail les analyses réalisées par ces moyens.

C'est ainsi que l'analyse instantanée effectuée à l'étape 3.1 permet d'estimer la configuration des voies ou "type de chaussée". Cette analyse repose sur l'identification éventuelle d'une chaussée à double sens de circulation, quand des véhicules sont détectés comme roulant dans la direction opposée à celle du véhicule équipé du dispositif suivant la présente l'invention, et sur l'estimation du nombre de voies de la chaussée, à partir du nombre de véhicules détecté au devant du véhicule équipé et roulant sur des voies adjacentes, et à partir de l'écartement des rails de sécurité et objets divers fixes détectés sur les bords de la chaussée.

La voie de circulation de chaque cible est déterminée par la configuration de voies précédemment établie, la distance et la position angulaire de cette cible.

La distance intervéhiculaire moyenne sur chaque voie est déterminée à chaque instant à partir des distances relatives de chaque cible, dans chacune des voies considérées.

La vitesse moyenne des véhicules sur chaque voie est estimée à partir des vitesses relatives des cibles circulant sur cette voie et de la vitesse du véhicule, connue par un des capteurs de l'ensemble 1.

L'analyse sur cycle temporel T effectuée à l'étape 3.2 permet l'estimation :
- du nombre de changements de voie de chaque cible pendant la durée T, à partir de l'identification de la voie de circulation de chaque cible,
- de la concentration moyenne des véhicules pendant la durée T à partir du nombre de cibles présentes par exemple dans l'espace se situant entre 50 et 150 m en avant du véhicule, pendant la durée T,
- de la vitesse moyenne du trafic pendant la durée T à partir de la vitesse moyenne instantanée sur chaque voie, enregistrée pendant la durée T, et
- du rayon de courbure moyen de la chaussée (en valeur absolue) à partir d'informations fournies par des gyromètres et/ou par un capteur d'angle du volant de direction du véhicule, formant partie de l'ensemble de capteurs 1, et de la vitesse du véhicule.

Les informations tirées des analyses décrites ci-dessus permettent de déterminer avec précision le contexte routier, soit le type de chaussée et la densité du trafic.

A titre d'exemple, le type de chaussée peut être déterminé à l'aide du tableau suivant, dont les entrées sont la configuration des voies (sens unique, deux fois une voie, deux fois deux voies, deux fois trois ou deux fois quatre voies), la présence ou l'absence d'un séparateur central sur la chaussée et le rayon de courbure moyen de cette chaussée, et dont les sorties sont les types de chaussée suivant : chaussée urbaine ("urbain"), voie rapide, autoroute, montagne :

**TABLEAU 1**

| **Estimation du type de route** | | Rayon de courbure moyen | | |
|---|---|---|---|---|
| *Configuration des voies* | *Séparateur central* | > 500 m | de 100 à 500 m | < 100 m |
| Sens unique 1 voie | x | Urbain | Urbain | Montagne |
| 2 x 1 | oui | Urbain | Urbain | Montagne |
| | non | Urbain | Urbain | Montagne |
| 2 x 2 | oui | Autoroute | Voie rapide | Urbain |
| | non | Voie rapide | Urbain | Urbain |
| 2 x 3 et 2 x 4 | oui | Autoroute | Voie rapide | Urbain |
| | non | Voie rapide | Voie rapide | Urbain |

Ce tableau est donné à titre d'exemple, et d'autres paramètres tels que la vitesse moyenne du trafic ou la largeur des voies de circulation, estimées par la détection des obstacles fixes en bordure des voies, peuvent être pris en compte dans l'analyse.

La densité du trafic peut être déterminée par exemple à l'aide du tableau suivant dont les entrées sont la concentration en véhicules sur la durée T, le nombre de changements de voie observé sur cette durée T, et la vitesse moyenne du trafic, estimée à partir des vitesses des véhicules observés, et dont les sorties comprennent les trois classes de trafic suivantes : bouchon, trafic normal, trafic fluide :

**TABLEAU 2**

| **Estimation de la densité du trafic** | | Vitesse moyenne du trafic | | |
|---|---|---|---|---|
| *Concentration*/*période T* | *Nb Changements voie* | 0 à 10 km/h | 10 à 40 km/h | + de 40 km/h |
| Faible | 0 | Normal | Fluide | Fluide |
| | 1 à 3 | Normal | Fluide | Fluide |
| | + de 3 | Normal | Fluide | Fluide |
| Moyenne | 0 | Normal | Normal | Normal |
| | 1 à 3 | Normal | Fluide | Fluide |
| | + de 3 | Normal | Fluide | Fluide |
| Forte | 0 | Bouchon | Bouchon | Normal |
| | 1 à 3 | Bouchon | Bouchon | Normal |
| | + de 3 | Bouchon | Normal | Normal |

Ce tableau est donné à titre d'exemple et d'autres paramètres tels que le type de route, la distance intervéhiculaire moyenne pourraient être pris en compte dans l'analyse.

## Revendications

1. Procédé de commande du groupe motopropulseur d'un véhicule automobile, reposant sur une estimation du contexte routier à partir d'informations délivrées par des capteurs de paramètres internes et externes au véhicule (1,2) propres à estimer le type de la chaussée et l'état du trafic, **caractérisé en ce qu'**on tire par analyse de ces paramètres pendant une durée (T) prédéterminée, une estimation du nombre de véhicules changeant de voie de circulation pendant ladite durée (T).

2. Procédé de commande du groupe motopropulseur d'un véhicule automobile reposant sur une estimation du contexte routier à partir d'informations délivrées par des capteurs de paramètres internes et externes au véhicule (1,2), propres à estimer le type de la chaussée et l'état du trafic, **caractérisé en ce qu'**on tire par analyse de ces paramètres pendant une durée (T) prédéterminée, une estimation du nombre de véhicules par unité de distance sur la chaussée.

3. Procédé de commande du groupe motopropulseur d'un véhicule automobile reposant sur une estimation du contexte routier à partir d'informations délivrées par des capteurs de paramètres internes et externes au véhicule (1,2) propres à estimer le type de la chaussée et l'état du trafic, **caractérisé en ce qu'**on tire par analyse de ces paramètres pendant une durée (T) prédéterminée, une estimation de la vitesse moyenne des véhicules circulant sur la chaussée.

4. Procédé de commande du groupe motopropulseur d'un véhicule automobile reposant sur une estimation du contexte routier à partir d'informations délivrées par des capteurs de paramètres internes et externes au véhicule (1,2) propres à estimer le type de la chaussée et l'état du trafic, **caractérisé en ce qu'**on tire par analyse de ces paramètres pendant une durée (T) prédéterminée, une estimation du rayon de courbure moyen de la partie de la chaussée sur laquelle circulent les véhicules pendant la durée (T).

5. Procédé selon la revendication 1 à 4, **caractérisé en ce qu'**on utilise un appareil (2) de télémétrie pour mesurer lesdits paramètres externes.

6. Procédé selon la revendication 5, **caractérisé en ce que** ledit appareil de télémétrie (2) est du type à balayage.

7. Procédé selon la revendication 4 ou 5, **caractérisé en ce que** lesdits paramètres externes sont constitués par les positions et vitesses relatives de chacun des véhicules circulant sur les divers voies de ladite chaussée, au voisinage du véhicule équipé dudit groupe motopropulseur.

8. Procédé selon l'une des revendications précédentes, **caractérisé en ce qu'**on tire desdits paramètres externes, par analyse instantanée, une estimation d'au moins une des caractéristiques du groupe formée par : la configuration des voies de ladite chaussée, la voie de circulation de chaque véhicule détecté, la distance moyenne entre véhicules d'une même voie, la vitesse moyenne des véhicules circulant sur ladite chaussée, la largeur des voies.

9. Procédé selon l'une des revendication précédentes, **caractérisé en ce qu'**on estime la densité du trafic routier à partir d'au moins une des caractéristiques du groupe formé par : le nombre de changements de voies, la vitesse moyenne des véhicules, le type de chaussée, la distance moyenne entre véhicules.

10. Dispositif pour la mise en oeuvre du procédé conforme à l'une quelconque des revendications 1 à 8, **caractérisé en ce qu'**il comprend a) un ensemble (1) de capteurs de paramètres de fonctionnement internes au véhicule, b) un appareil de télémétrie (2) pour la mesure des paramètres externes au véhicule, c) des moyens (3) d'estimation du contexte routier alimentés par ledit ensemble (1) de capteurs et ledit appareil (2) de télémétrie ces moyens (3) d'estimation estimant en outre, par analyse de l'évolution desdits paramètres sur une durée (T) prédéterminée, d'au moins une caractéristique du groupe formé par : le nombre de véhicules changeant de voie de circulation pendant ladite durée (T), le nombre de véhicules par unité de distance sur ladite chaussée, la vitesse moyenne des véhicules circulant sur ladite chaussée, le rayon de courbure moyen de la partie de la chaussée sur laquelle circule lesdits véhicules pendant ladite durée (T) et d) des moyens (4) de supervision du fonctionnement du groupe motopropulseur, alimentés par lesdits moyens d'estimation (3) et conçus pour commander ledit fonctionnement en fonction du contexte estimé et d'une stratégie prédéterminée (STRi).

11. Dispositif conforme à la revendication 9, **caractérisé en ce que** lesdits moyens de supervision agissent sur l'une au moins des caractéristiques du groupe formé par : la cartographie d'injection d'un moteur à combustion interne formant partie du groupe motopropulseur, les lois de passage d'une boîte de vitesses automatique associés audit groupe, la stratégie de commande des purges d'un pot catalytique à piégeage des oxydes d'azote associé audit moteur, l'interprétation d'une consigne de couple demandée par le conducteur du véhicule, l'émission d'informations adressées au conducteur.

## Patentansprüche

1. Verfahren zur Steuerung der Antriebsgruppe eines Kraftfahrzeugs, beruhend auf einer Schätzung des Straßen-Kontexts, ausgehend von Informationen, die von Sensoren interner und externer Parameter des Fahrzeugs (1, 2) geliefert werden, die dazu geeignet sind, die Art der Fahrbahn und den Zustand des Verkehrs zu schätzen, **dadurch gekennzeichnet, dass** man durch Analyse dieser Parameter während eines vorbestimmten Zeitraums (T) eine Schätzung der Anzahl von Fahrzeugen macht, die die Fahrspur während dieses Zeitraums (T) wechseln.

2. Verfahren zur Steuerung der Antriebsgruppe eines Kraftfahrzeugs, beruhend auf einer Schätzung des Straßen-Kontexts, ausgehend von Informationen, die von Sensoren interner und externer Parameter des Fahrzeugs (1, 2) geliefert werden, die dazu geeignet sind, die Art der Fahrbahn und den Zustand des Verkehrs zu schätzen, **dadurch gekennzeichnet, dass** man durch Analyse dieser Parameter während eines vorbestimmten Zeitraums (T) eine Schätzung der Anzahl von Fahrzeugen pro Entfernungseinheit auf der Fahrbahn macht.

3. Verfahren zur Steuerung der Antriebsgruppe eines Kraftfahrzeugs, beruhend auf einer Schätzung des Straßen-Kontexts, ausgehend von Informationen, die von Sensoren interner und externer Parameter des Fahrzeugs (1, 2) geliefert werden, die dazu geeignet sind, die Art der Fahrbahn und den Zustand des Verkehrs zu schätzen, **dadurch gekennzeichnet, dass** man durch Analyse dieser Parameter während eines vorbestimmten Zeitraums (T) eine Schätzung der durchschnittlichen Geschwindigkeit der auf der Fahrbahn fahrenden Fahrzeuge macht.

4. Verfahren zur Steuerung der Antriebsgruppe eines Kraftfahrzeugs, beruhend auf einer Schätzung des Straßen-Kontexts, ausgehend von Informationen, die von Sensoren interner und externer Parameter des Fahrzeugs (1, 2) geliefert werden, die dazu geeignet sind, die Art der Fahrbahn und den Zustand des Verkehrs zu schätzen, **dadurch gekennzeichnet, dass** man durch Analyse dieser Parameter während eines vorbestimmten Zeitraums (T) eine Schätzung der Anzahl des durchschnittlichen Kurvenradius des Teils der Fahrbahn macht, auf dem die Fahrzeuge während dieses Zeitraums (T) fahren.

5. Verfahren gemäß Anspruch 1 bis 4, **dadurch gekennzeichnet, dass** man ein Telemetriegerät (2) verwendet, um diese externen Parameter zu messen.

6. Verfahren gemäß Anspruch 5, **dadurch gekennzeichnet, dass** dieses Telemetriegerät (2) vom Typ Abtasten ist.

7. Verfahren gemäß Anspruch 4 oder 5, **dadurch gekennzeichnet, dass** diese externen Parameter aus den relativen Positionen und Geschwindigkeiten eines jeden Fahrzeugs besteht, das auf den verschiedenen Spuren der Fahrbahn in Nachbarschaft zu dem Fahrzeug fährt, das mit dieser Antriebsgruppe ausgestattet ist.

8. Verfahren gemäß einem der vorhergehenden Ansprüche, **dadurch gekennzeichnet, dass** man aus diesen externen Parametern durch augenblickliche Analyse eine Schätzung von mindestens einer der Eigenschaften macht, die gebildet wird aus: der Konstellation der Spuren der Fahrbahn, der Fahrspur von jedem entdeckten Fahrzeug, dem durchschnittlichen Abstand zwischen Fahrzeugen der selben Spur, der durchschnittlichen Geschwindigkeit der Fahrzeuge, die auf dieser Straße fahren, der Breite der Spuren.

9. Verfahren gemäß einem der vorhergehenden Ansprüche, **dadurch gekennzeichnet, dass** man die Dichte des Straßenverkehrs ausgehend von mindestens einer Eigenschaft der Gruppe schätzt, die gebildet wird aus: der Anzahl der Spurwechsel, der durchschnittlichen Geschwindigkeit der Fahrzeuge, der Art der Fahrbahn, dem durchschnittlichen Abstand zwischen den Fahrzeugen.

10. Vorrichtung zur Durchführung des Verfahrens gemäß irgend einem der Ansprüche 1 bis 8, **dadurch gekennzeichnet, dass** sie aufweist a) eine Gesamtheit (1) von Sensoren von internen Betriebsparametern des Fahrzeugs, b) ein Telemetriegerät (2) zur Messung der externen Parameter des Fahrzeugs, c) Mittel (3) zur Einschätzung des Straßen-Kontexts, die durch die Gesamtheit (1) von Sensoren und das Telemetriegerät (2) versorgt werden, wobei diese Mittel (3) zur Einschätzung darüber hinaus durch Analyse der Entwicklung der Parameter über einen vorbestimmten Zeitraum (T) hinweg mindestens eine Eigenschaft der Gruppe schätzen, die gebildet wird aus: der Anzahl von Fahrzeugen, die während dieses Zeitraums (T) die Fahrspur wechseln, der Anzahl der Fahrzeuge pro Entfernungseinheit auf der Fahrbahn, der durchschnittlichen Geschwindigkeit der Fahrzeuge, die auf der Fahrbahn fahren, dem durchschnittlichen Kurvenradius des Teils der Fahrbahn, auf dem die Fahrzeuge während dieses Zeitraums (T) fahren, und d) Mittel (4) zur Überwachung des Betriebs der Antriebsgruppe, versorgt durch die Mittel zur Einschätzung (3) und dazu bestimmt, den Betrieb abhängig vom eingeschätzten Kontext und einer vorbestimmten Strategie (STRi) zu steuern.

11. Vorrichtung entsprechend Anspruch 9, **dadurch gekennzeichnet, dass** die Mittel zur Überwachung auf mindestens einer der Eigenschaften der Gruppe einwirken, die gebildet wird aus: der Kartographie der Einspritzung eines Verbrennungsmotors, der einen Teil der Antriebsgruppe darstellt, den Übergangsregeln eines Automatikgetriebes, das mit der Gruppe verbunden ist, der Strategie der Steuerung der Entleerungen eines katalytischen Topfs zum Fangen von Stickoxyden, der mit dem Motor verbunden ist, der Interpretation einer Anweisung von Drehmoment, das durch den Fahrer des Fahrzeugs verlangt wird, der Ausgabe von an den Fahrer gerichteten Informationen.

## Claims

1. Process for controlling the power train of a motor vehicle, based on an assessment of the driving environment from information delivered by sensors of parameters internal and external to the vehicle (1, 2) that are able to assess the type of road and the traffic conditions, **characterized in that**, by analysis of these parameters during a predetermined period (T), an assessment of the number of vehicles changing lane during said period (T) is produced.

2. Process for controlling the power train of a motor vehicle based on an assessment of the driving environment from information delivered by sensors of parameters internal and external to the vehicle (1, 2), that are able to assess the type of road and the traffic conditions, **characterized in that**, by analysis of these parameters during a predetermined period (T), an assessment of the number of vehicles per unit of distance on the road is produced.

3. Process for controlling the power train of a motor vehicle based on an assessment of the driving environment from information delivered by sensors of parameters internal and external to the vehicle (1, 2) that are able to assess the type of road and the traffic conditions, **characterized in that**, by analysis of these parameters during a predetermined period (T), an assessment of the average speed of the vehicles travelling on the road is produced.

4. Process for controlling the power train of a motor vehicle based on an assessment of the driving environment from information delivered by sensors of parameters internal and external to the vehicle (1, 2) that are able to assess the type of road and the traffic conditions, **characterized in that**, by analysis of these parameters during a predetermined period (T), an assessment of the average radius of curvature of the part of the road on which the vehicles are travelling during the period (T) is produced.

5. Process according to claims 1 to 4, **characterized in that** a telemetry device (2) is used to measure said external parameters.

6. Process according to claim 5, **characterized in that** said telemetry device (2) is of a scanning type.

7. Process according to claim 4 or 5, **characterized in that** said external parameters are made up of the relative positions and speeds of each of the vehicles travelling on the various lanes of said road, in proximity to the vehicle equipped with said power train.

8. Process according to one of the previous claims, **characterized in that**, by instantaneous analysis, an assessment is produced of at least one of the characteristics of a group made up of the lane configuration of said road, the lane of each vehicle detected, the average distance between vehicles in the same lane, the average speed of the vehicles travelling on said road and the width of the lanes.

9. Process according to one of the previous claims, **characterized in that** the density of the road traffic is assessed from at least one of the characteristics of a group made up of the number of lane changes, the average speed of the vehicles, the type of road and the average distance between vehicles.

10. Device for implementing the process according to any one of claims 1 to 8, **characterized in that** it comprises a) a set (1) of internal vehicle operating parameter sensors, b) a telemetry device (2) for the measurement of the parameters external to the vehicle, c) means (3) of assessing the driving environment supplied by said set (1) of sensors and said telemetry device (2), these assessment means (3) also assessing, by analysis of changes in said parameters over a predetermined period (T), at least one characteristic of a group made up of the number of vehicles changing lane during said period (T), the number of vehicles per unit of distance on said road, the average speed of the vehicles travelling on said road and the average radius of curvature of the part of the road on which said vehicles are travelling during said period (T), and d) means (4) of monitoring the operation of the power train, supplied by said assessment means (3) and designed to control said operation according to the determined environment and a predetermined strategy (STRi).

11. Device according to claim 9, **characterized in that** said monitoring means act on at least one of the characteristics of a group made up of the injection mapping of an internal combustion engine forming part of the power train, the shifting laws of an automatic gearbox linked to said train, the lean NOx trap catalytic converter purging control strategy linked to said engine, the interpretation of a torque setting demanded by the driver of the vehicle and the sending of information to the driver.
